# EUROPEAN PATENT APPLICATION

(11) **EP 4 852 437 A1**
(43) Date of publication of application: **09.12.2026**
(21) Application number: 25748001.2
(22) Date of filing: 27.01.2025
(51) Int. Cl.: H04N 21/472

(54) **MULTIMEDIA CONTENT EDITING METHOD AND APPARATUS, AND ELECTRONIC DEVICE, MEDIUM AND PRODUCT**

(30) Priority: 02.02.2024 CN 202410156070
(71) Applicant: Beijing Zitiao Network Technology Co., Ltd., Beijing 100190 (CN)
(72) Inventor: BAI, Hao, Beijing 100028 (CN); ZHANG, Jiawei, Beijing 100028 (CN)
(74) Representative: Isarpatent
(86) International application number: PCT/CN2025/075436
(87) International publication number: WO 2025/162438

(57) **Abstract**

Disclosed in the embodiments of the present disclosure are a multimedia content editing method and apparatus, and an electronic device, a storage medium and a product. The method comprises: on the basis of multimedia material and editing information, generating a multimedia content editing draft, wherein the editing information indicates an editing operation, and the editing operation instructs to apply an editing effect to the multimedia material; in response to an export operation for the multimedia content editing draft, if the multimedia content editing draft meets a task trigger condition, presenting a video playing task; in response to a trigger operation for the video playing task, playing a video indicated by the video playing task; and in response to the completion of the playing of the video indicated by the video playing task, performing export and synthesis on the multimedia content editing draft, so as to obtain a target video. The technical solution in the embodiments of the present disclosure can expand application service links during multimedia content editing, combines multimedia content editing with a video playing task, and provides multi-dimensional application experience during the process of exporting a multimedia content editing result.

## Description

The present application claims priority to Chinese Patent Application No. 202410156070.X, filed on February 02, 2024, which is incorporated herein by reference in its entirety as a part of the present application.

### TECHNICAL FIELD

Embodiments of the present disclosure relate to a multimedia content editing method and apparatus, an electronic device, a medium, and a product.

### BACKGROUND

In a video editing application, more video editing materials and video editing templates are provided for paying users. Non-paying users cannot export video files after editing videos with some chargeable materials, effects, or templates, and can only pay or give up the edited content. The business logic in the video editing application has certain limitations, which may reduce the application experience of users.

### SUMMARY

Embodiments of the present disclosure provide a multimedia content editing method and apparatus, an electronic device, a medium, and a product, which may broaden an application service link in a multimedia content editing process, combine multimedia content editing with a video playback task, and provide a multi-dimensional application experience in a process of exporting multimedia content editing results.

At least one embodiment of the present disclosure provides a multimedia content editing method. The method includes:
generating a multimedia content editing draft according to a multimedia material and editing information, where the editing information is used to indicate an editing operation, and the editing operation is used to indicate applying an editing effect on the multimedia material;
in response to an exporting operation of the multimedia content editing draft, if the multimedia content editing draft satisfies a task trigger condition, displaying a video playback task;
in response to a trigger operation for the video playback task, playing a video indicated by the video playback task; and
in response to completion of playback of the video indicated by the video playback task, performing export synthesis on the multimedia content editing draft to obtain a target video.

At least one embodiment of the present disclosure further provides a multimedia content editing apparatus. The apparatus includes:
a content editing draft generating module, configured to generate a multimedia content editing draft according to a multimedia material and editing information, where the editing information is used to indicate an editing operation, and the editing operation is used to indicate applying an editing effect on the multimedia material;
a content export task display module, configured to, in response to an exporting operation of the multimedia content editing draft, if the multimedia content editing draft satisfies a task trigger condition, display a video playback task;
a content export task execution module, configured to, in response to a trigger operation for the video playback task, play a video indicated by the video playback task; and
an exported content synthesis module, configured to, in response to completion of playback of the video indicated by the video playback task, perform export synthesis on the multimedia content editing draft to obtain a target video.

At least one embodiment of the present disclosure further provides an electronic device. The electronic device includes:
one or more processors; and
a storage apparatus, configured to store one or more programs,
where the one or more programs, when executed by the one or more processors, cause the one or more processors to implement the multimedia content editing method provided by at least one embodiment of the present disclosure.

At least one embodiment of the present disclosure further provides a storage medium including computer-executable instructions that, when executed by a computer processor, are configured to perform the multimedia content editing method provided by at least one embodiment of the present disclosure.

At least one embodiment of the present disclosure further provides a computer program product including a computer program that, when executed by a processor, implements the multimedia content editing method provided by at least one embodiment of the present disclosure.

### BRIEF DESCRIPTION OF DRAWINGS

The above and other features, advantages and aspects of the embodiments of the present disclosure will become more apparent when taken in conjunction with the drawings and with reference to the following detailed description. Throughout the drawings, the same or similar reference numbers refer to the same or similar elements. It should be understood that the drawings are schematic and that the components and elements are not necessarily drawn to scale.
Fig. 1 is a schematic flowchart of a multimedia content editing method provided by at least one embodiment of the present disclosure;
Fig. 2 is a schematic diagram of a display page of a video playback task provided by at least one embodiment of the present disclosure;
Fig. 3 is a schematic flowchart of a multimedia content editing method provided by at least another embodiment of the present disclosure;
Fig. 4 is a schematic diagram of displaying a task progress of a video playback task provided by at least one embodiment of the present disclosure;
Fig. 5 is a schematic diagram of displaying a task progress of a video playback task provided by at least another embodiment of the present disclosure;
Fig. 6 is a schematic flowchart of a multimedia content editing method provided by at least yet another embodiment of the present disclosure;
Fig. 7 is a schematic diagram of a task progress reward of a video playback task provided by at least one embodiment of the present disclosure;
Fig. 8 is a schematic structural diagram of a multimedia content editing apparatus provided by at least one embodiment of the present disclosure; and
Fig. 9 is a schematic structural diagram of an electronic device provided by at least one embodiment of the present disclosure.

### DETAILED DESCRIPTION

Embodiments of the present disclosure will be described in more detail below with reference to the drawings. Although certain embodiments of the present disclosure are shown in the drawings, it should be understood that the present disclosure may be implemented in various forms and should not be construed as limited to the embodiments set forth herein; on the contrary, these embodiments are provided for a more thorough and complete understanding of the present disclosure. It should be understood that the drawings and embodiments of the present disclosure are only for illustrative purposes and are not intended to limit the scope of protection of the present disclosure.

It should be understood that various steps described in method implementations provided by at least one embodiment of the present disclosure may be performed in different orders and/or in parallel. In addition, the method implementations may include additional steps and/or omit performing the illustrated steps. The scope of the present disclosure is not limited in this regard.

As used herein, the term "include/comprise" and variations thereof are open-ended inclusions, i.e., "include/comprise but not limited to". The term "based on" is "based at least in part on". The term "one embodiment" means "at least one embodiment"; the term "another embodiment" means "at least one other embodiment"; the term "some embodiments" means "at least some embodiments". Relevant definitions of other terms will be given in the description below.

It should be noted that concepts such as "first" and "second" mentioned in the present disclosure are only used to distinguish different apparatuses, modules or units, and are not used to limit the order or interdependence of the functions performed by these apparatuses, modules or units.

It should be noted that the modifiers of "one" and "multiple" mentioned in the present disclosure are illustrative rather than restrictive, and those skilled in the art should understand that they should be understood as "one or more" unless clearly indicated in the context otherwise.

It may be understood that before using the technical solutions disclosed in the embodiments of the present disclosure, the user should be informed of the type, range of use, use scenarios, etc., of personal information involved in the present disclosure and obtain the authorization of the user in an appropriate manner in accordance with relevant laws and regulations.

For example, in response to receiving an active request from a user, prompt information is sent to the user to clearly prompt the user that the requested operation will require access to and use of the user's personal information. In this way, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to receiving the active request from the user, the prompt information may be sent to the user in the form of, for example, a pop-up window, in which the prompt information may be presented in text. In addition, the pop-up window may also include a selection control for the user to choose whether to "agree" or "disagree" to provide the personal information to the electronic device.

It may be understood that the above process of notifying and obtaining user authorization is only illustrative and does not limit the implementations of the present disclosure, and other methods that satisfy the relevant laws and regulations may also be applied to the implementations of the present disclosure.

It may be understood that the data involved in the technical solutions of the present disclosure (including but not limited to the data itself, acquisition or use of the data) should comply with the requirements of corresponding laws, regulations and related provisions.

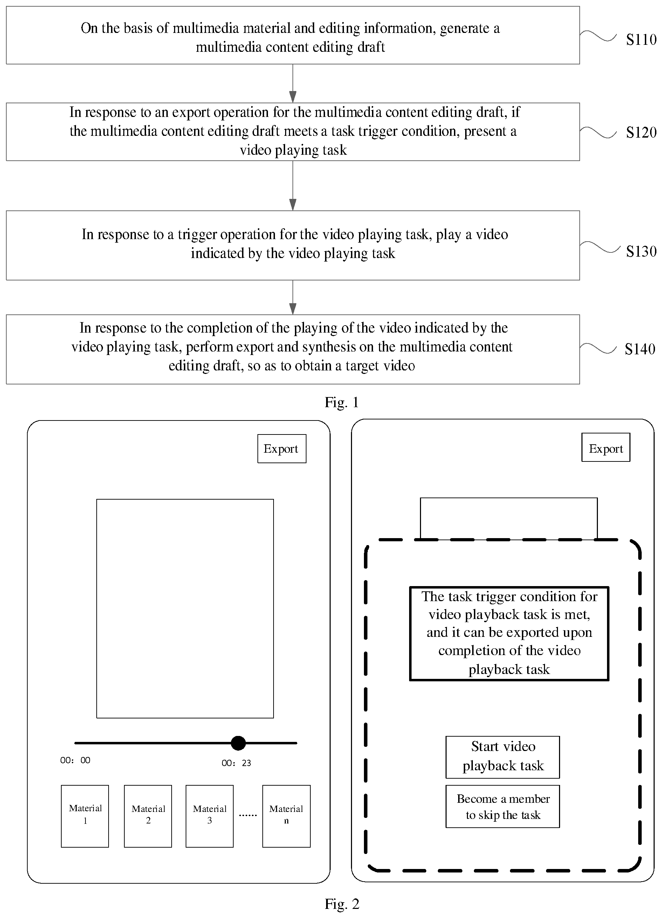

Fig. 1 is a schematic flowchart of a multimedia content editing method provided by at least one embodiment of the present disclosure. The embodiment of the present disclosure is applicable to a scenario of editing multimedia content such as audio and video data, especially a case where a multimedia content editing draft contains multimedia materials and editing information that are subject to use conditions and cannot be directly exported for use. The method may be performed by a multimedia content editing apparatus, which may be implemented in the form of software and/or hardware. Optionally, the multimedia content editing apparatus may be implemented by an electronic device, which may be a mobile terminal, a PC, a server, or the like.

As shown in Fig. 1, the multimedia content editing method in this embodiment includes the following steps.

S110, generating a multimedia content editing draft according to a multimedia material and editing information.

For example, a multimedia material refers to various auditory, visual, and tactile materials used in a multimedia content editing process, including text, images, audio, video, animation, and the like. These materials may be processed, edited, and synthesized by computer technology. The multimedia material may be data imported by a user who edits the multimedia content, or may be data stored in a content editing application database.

For example, the editing information may be used to indicate an editing operation, and the editing operation may be used to indicate applying an editing effect on the multimedia material. The editing effect may be any effect presented in a process of displaying a multimedia content editing result, including a combination of one or more of an image editing effect, an audio editing effect, a video editing effect, an animation editing effect, and an effect editing effect.

The editing information may be editing information generated based on user editing operations in a multi-track editor of a content editing application, or may be an editing template in a content editing application database.

Generating the multimedia content editing draft according to the multimedia material and the editing information may be an editing result obtained by organizing and editing the multimedia material according to an arrangement order and a time axis based on the editing information.

S120, in response to an exporting operation of the multimedia content editing draft, if the multimedia content editing draft satisfies a task trigger condition, displaying a video playback task.

In general, after editing the multimedia content editing draft, the user may export and synthesize the editing result, and then publish the multimedia content. However, in some cases, if there is a multimedia material or editing information in the multimedia content editing draft that is subject to an export use condition, the multimedia content editing draft cannot be directly exported. In this case, the video playback task may be displayed when the task trigger condition is satisfied.

It may be understood that the multimedia material or editing information in the multimedia content editing draft may be the multimedia material or editing information that is referenced from the content editing application database. The multimedia material or editing information in the content editing application database may be a result produced by other users through multimedia content editing labor, and some use conditions may be set. For example, the multimedia material or editing information may be directly used and then directly exported by a member user of the content editing application, or a one-time payment may be set for exporting and using the multimedia material or editing information. In addition, a user interaction task may be set so that a user who edits the multimedia content editing draft may export and use the multimedia content editing draft after completing the user interaction task. In this embodiment, the user interaction task may be a video playback task, for example, playing specified video content, which may be a promotional video of some objects.

For example, the task trigger condition may include one or more of the following conditions: the multimedia material includes a target material, the editing effect includes a target effect, and the editing information is specified editing information, where the specified editing information includes a target editing template. The target material, the target effect, and the target editing template may be understood as a material, an effect, and a template that are subject to export use conditions. The export use condition may be completion of the video playback task. The target material, the target effect, and the target editing template may be displayed in a corresponding material display position and a corresponding template display position, and added with identification information associated with the video playback task. The user may determine, based on the identification information, whether it is necessary to complete the video playback task when exporting the multimedia content editing draft.

Displaying the video playback task may be popping up a floating layer in a multimedia content editing interactive interface and displaying relevant content of the video playback task in the popped up page floating layer. For example, the displayed relevant content may include at least one of the following: video playback task trigger condition description information, guidance information for executing the video playback task, a video playback task execution trigger entry, a task exit function button, and the like.

Exemplarily, referring to a schematic diagram of displaying a video playback task shown in Fig. 2. The left diagram in Fig. 2 is a schematic diagram of an editing interactive interface of a multimedia content editing draft. When an "Export" button therein is triggered, a floating window pops up to display a video playback task, including video playback task trigger description information, a video playback task start button, and a function entry for exempting from the video playback task (becoming a member to skip the task).

S130, in response to a trigger operation for the video playback task, playing a video indicated by the video playback task.

After the video playback task is triggered, the video indicated by the video playback task may be played in response to the trigger operation for the video playback task.

For example, the video indicated by the video playback task may be an object promotional video, such as an advertisement video. The number of videos indicated by the video playback task may be one or more.

In any specific multimedia content editing draft editing and exporting scenario, the number of videos indicated by the video playback task may be determined based on an export use condition value corresponding to the target material, the target effect, and the target editing template, a satisfiable condition value corresponding to each video, and attribute information corresponding to the user who edits the multimedia content editing draft. For example, multimedia content editing drafts to be exported by different users contain different target materials, target effects, or target editing templates, and corresponding numbers of videos are different.

S140, in response to the video indicated by the video playback task being completely played, performing export synthesis on the multimedia content editing draft to obtain a target video.

The video indicated by the video playback task being completely played may indicate that the video playback task has been completed and an export use right of the target material, the target effect, or the target editing template in the multimedia content editing draft is acquired, so that the export synthesis may be performed on the multimedia content editing draft to obtain the target video.

After obtaining the target video, the user may export the target video to other social media platforms and publish the target video. If the target video is not exported, the export use right of the target material, the target effect, or the target editing template in the multimedia content editing draft acquired after the completion of the video playback task is not used.

Correspondingly, in a state where the target video is not exported, the export use right of the target material, the target effect, or the target editing template in the multimedia content editing draft may be retained for a user account that triggers the exporting operation within a preset validity period. That is, within the preset validity period, when the target material, the target effect, or the target editing template is re-edited into any multimedia content editing draft, a task completion progress of a video playback task associated with the any multimedia content editing draft is marked as a completed state, and the any multimedia content editing draft may be directly exported.

According to the technical solution of at least one embodiment of the present disclosure, a multimedia content editing draft is generated according to a multimedia material and editing information, where the editing information is used to indicate an editing operation, and the editing operation is used to indicate applying an editing effect on the multimedia material; in response to an exporting operation of the multimedia content editing draft, if the multimedia content editing draft satisfies a task trigger condition, a video playback task is displayed; in response to a trigger operation for the video playback task, a video indicated by the video playback task is played; and in response to completion of video playback indicated by the video playback task, export synthesis is performed on the multimedia content editing draft to obtain a target video. At least one embodiment of the present disclosure solves the problem that the edited content cannot be exported due to some conditional limitations in a multimedia content editing process, combines multimedia content editing with the video playback task, and removes the conditional limitations upon the completion of the video playback task to export a multimedia content editing result, which may broaden an application service link in the multimedia content editing process and provide a multi-dimensional application experience in a process of exporting multimedia content editing results.

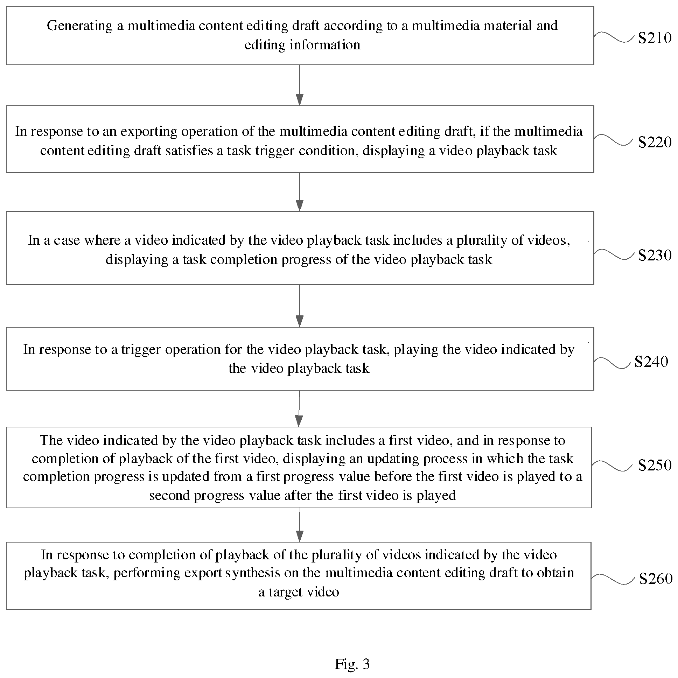

Fig. 3 is a schematic flowchart of a multimedia content editing method provided by at least another embodiment of the present disclosure. Based on the above embodiments, in a process of implementing the flowchart of the multimedia content editing method, a process of completing the video playback task when the video playback task indicates multiple videos is further explained. The method may be performed by a multimedia content editing apparatus, which may be implemented in the form of software and/or hardware. Optionally, the multimedia content editing apparatus is implemented by an electronic device, which may be a mobile terminal, a PC, a server, or the like.

As shown in Fig. 3, the multimedia content editing method includes the following steps.

S210, generating a multimedia content editing draft according to a multimedia material and editing information.

For example, the editing information is used to indicate an editing operation, and the editing operation is used to indicate applying an editing effect on the multimedia material.

S220, in response to an exporting operation of the multimedia content editing draft, if the multimedia content editing draft satisfies a task trigger condition, displaying a video playback task.

For example, if the multimedia content editing draft satisfies the task trigger condition, before displaying the video playback task, an interaction attribute feature of a user account that triggers the exporting operation may be analyzed to determine whether the number of video(s) indicated by the video playback task is one or greater than one, and then display the video playback task. For example, the interaction attribute feature may indicate a monetization capability of a user creation, such as eCPM (effective cost per mile), which is the profit earned per thousand displays. It is one of the important indicators to measure the monetization capability of content creators. The higher the eCPM value, the higher the corresponding monetization level. For users with higher eCPM values, the task difficulty of the video playback task may be reduced, so that the number of videos indicated by the triggered video playback task is relatively small.

S230, in a case where the video indicated by the video playback task includes multiple videos, displaying a task completion progress of the video playback task.

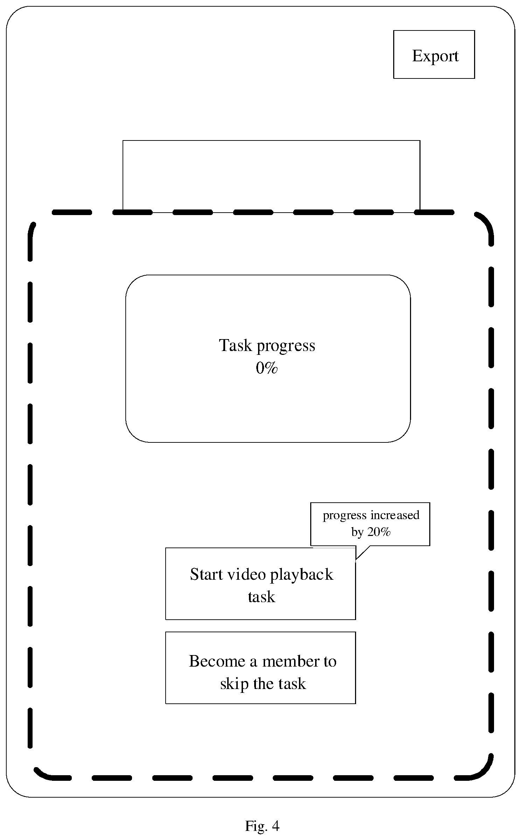

When the video indicated by the video playback task includes multiple videos, the task completion progress of the video playback task is displayed while the video playback task is displayed. In the video playback task display pop-up window shown in Fig. 4, the video playback task has not been triggered for execution, and the task completion progress corresponding to the corresponding initial task state is zero. "progress increased by 20%" displayed at the video playback task execution trigger entry indicates that after the video playback task starts, the task completion progress can be increased by 20% after the indicated current video to be played is completely played.

In a case where the video indicated by the video playback task includes multiple videos, the task completion progress of the video playback task is displayed in a visualized manner, to help the user understand the task completion progress.

S240, in response to a trigger operation for the video playback task, playing the video indicated by the video playback task.

After the video playback task is triggered, the video indicated by the video playback task may be played in response to the trigger operation for the video playback task. After each video is played, waiting for a trigger operation of a next video, and then continuing to play the next video. A playing order of the multiple videos indicated by the video playback task may be random, or may be determined after sorting according to a task progress value corresponding to each video.

S250, the video indicated by the video playback task includes a first video, and in response to completion of playback of the first video, displaying an updating process in which a task completion progress is updated from a first progress value before the first video is played to a second progress value after the first video is played.

For example, the first video may be understood as a video played after the video playback task is triggered, that is, a corresponding video to be played after each triggering in the video indicated by the video playback task. A difference between the second progress value and the first progress value represents a task progress value corresponding to the first video.

In order to increase the interest in the process of the video playback task and make the change in the task completion progress more intuitive, in this embodiment, every time a video is completely played, the change process of the task completion progress corresponding to the completely played video is displayed.

In a feasible implementation, the process in which the task completion progress grows from the first progress value before each video is completely played to the second progress value may be displayed with a preset animation effect; where the task progress value corresponding to each first video may be displayed at a playing trigger button of the video.

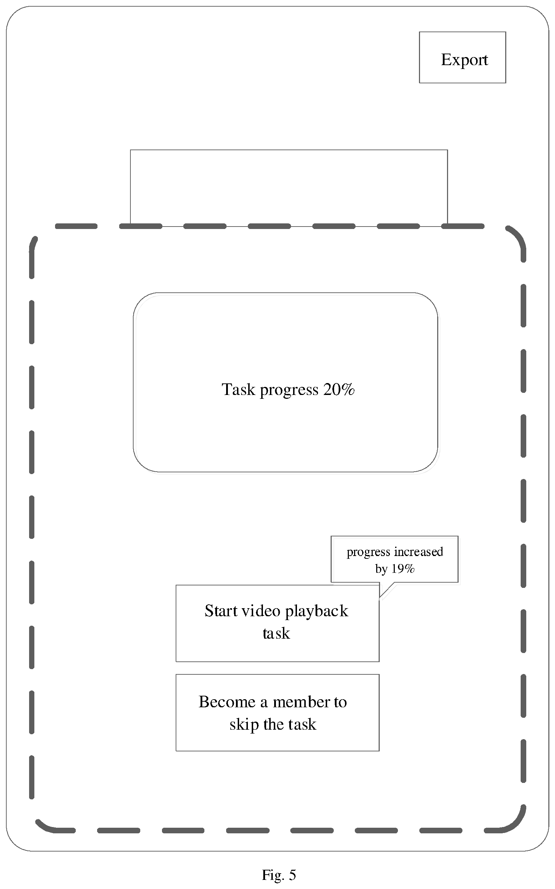

Exemplarily, after a first first video in the video playback task in Fig. 4 is completely played, the task completion progress grows from 0% to 20%. The process of increasing the task completion progress may be displayed in the form of an animation effect. In addition, "progress increased by19%" at the video playback task trigger start in Fig. 5 is the task progress value corresponding to the next first video to be played.

For example, the task progress value of each video indicated by the video playback task may be determined based on content attribute information of each video indicated by the video playback task and a mapping relationship between the number of videos that have been played and a task progress value. For example, the content attribute information of each video may be an advertising value of the video content, and different content attribute information may correspond to different advertising values. The advertising value is directly proportional to the task progress value. The higher the advertising value corresponding to the content attribute information of the video, the higher the task progress value corresponding to the video. In addition, the number of videos indicated by the video playback task may be a preset constant value or a non-fixed value. Generally, the number of videos that have been played is inversely proportional to the task progress value. The greater the number of videos that have been played, the lower the task progress value corresponding to the next video to be played. The number of videos that have been played may be the number of videos that have been played in a video playback task, or may be the accumulation of the number of videos that have been played in previous video playback tasks.

The user may measure based on the progress value of the task completion progress and the task progress value corresponding to the next video to be played, and determine whether to continue to complete the video playback task.

S260, in response to completion of playback of the multiple videos indicated by the video playback task, performing export synthesis on the multimedia content editing draft to obtain a target video.

The completion of playback of the multiple videos indicated by the video playback task may be understood as that after the multiple videos are played, the task completion progress reaches 100%, and the video playback task has been completed. Therefore, the export synthesis can be performed on the multimedia content editing draft to obtain the target video.

According to the technical solution of the embodiment of the present disclosure, a multimedia content editing draft is generated according to a multimedia material and editing information; in response to an exporting operation of the multimedia content editing draft, if the multimedia content editing draft satisfies a task trigger condition, a video playback task is displayed; in a case where a video indicated by the video playback task includes multiple videos, a task completion progress of the video playback task is displayed; in response to a trigger operation for the video playback task, the video indicated by the video playback task is played; in response to each of the multiple videos indicated by the video playback task being completely played, a change process of the task completion progress is displayed; and in response to the multiple videos indicated by the video playback task being completely played, export synthesis is performed on the multimedia content editing draft to obtain a target video. The embodiment of the present disclosure solves the problem that the edited content cannot be exported due to some conditional limitations in a multimedia content editing process, combines multimedia content editing with the video playback task, and removes the conditional limitations upon the completion of the video playback task to export a multimedia content editing result, which may broaden an application service link in the multimedia content editing process and provide a multi-dimensional application experience in a process of exporting multimedia content editing results. In addition, in at least one embodiment of the present disclosure, a dynamic effect display of increasing the task completion progress after each video is completely played is added, which may intuitively display the task completion progress of the video playback task for the user and improve the interest in the process of completing the video playback task.

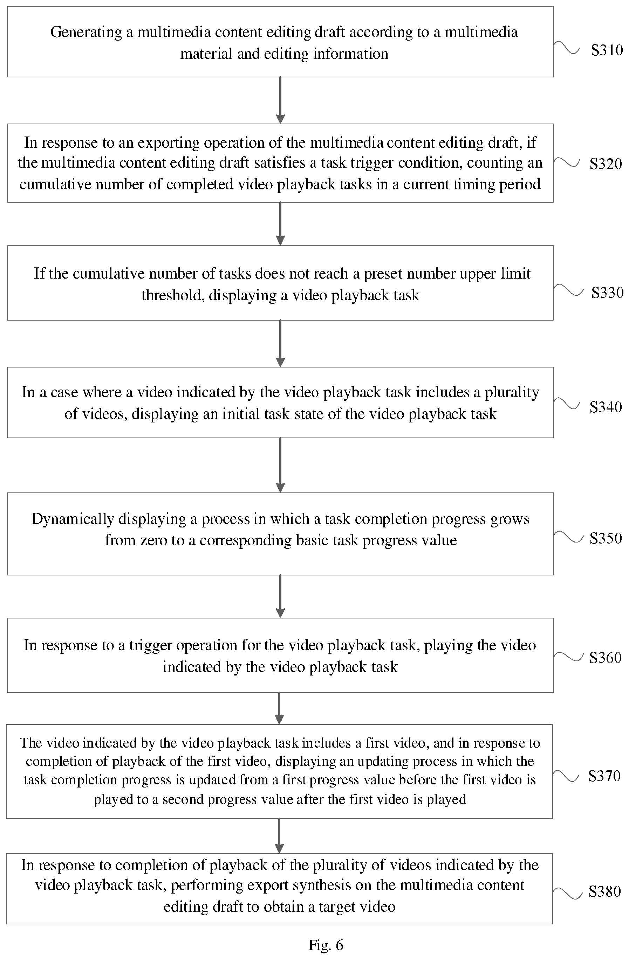

Fig. 6 is a schematic flowchart of a multimedia content editing method provided by at least yet another embodiment of the present disclosure. Based on the above embodiments, in a process of implementing the flowchart of the multimedia content editing method, a task reward implementation process of a video playback task is further explained. The method may be performed by a multimedia content editing apparatus, which may be implemented in the form of software and/or hardware. Optionally, the multimedia content editing apparatus is implemented by an electronic device, which may be a mobile terminal, a PC, a server, or the like.

As shown in Fig. 6, the multimedia content editing method includes the following steps.

S310, generating a multimedia content editing draft according to a multimedia material and editing information.

For example, the editing information is used to indicate an editing operation, and the editing operation is used to indicate applying an editing effect on the multimedia material.

S320, in response to an exporting operation of the multimedia content editing draft, if the multimedia content editing draft satisfies a task trigger condition, counting an cumulative number of completed video playback tasks in a current timing period.

In this embodiment, a limit mechanism on the number of times of completing the video playback task is added. Before displaying the video playback task, the cumulative number of completed video playback tasks in the current timing period may be counted. The timing period may be a time period in units of days or weeks, and the current timing period may be a timing period corresponding to a current time. For example, with one day as the timing period, the current timing period is the day of the moment when an exporting operation of the multimedia content editing draft is triggered. Counting the cumulative number of completed video playback tasks in the current timing period is counting, from zero o'clock of the day on which the exporting operation of the multimedia content editing draft is triggered to the moment when the exporting operation of the multimedia content editing draft is triggered, the number of video playback tasks that have been completed by a user account that triggers the exporting operation of the multimedia content editing draft.

S330, if the cumulative number of tasks does not reach a preset number upper limit threshold, displaying the video playback task.

For example, the preset number upper limit threshold may be understood as an upper limit on the number of times of exchanging the export use right of the target material, the target effect, or the target editing template in the multimedia content editing draft through the video playback task. When the cumulative number of tasks does not reach the preset number upper limit threshold, the video playback task may be displayed.

If the cumulative number of tasks reaches the preset number upper limit threshold, operation abnormality prompt information of the exporting operation is displayed, that is, the video playback task is no longer displayed. Displaying the operation abnormality prompt information of the exporting operation may be prompt information indicating that the export use condition of the target material, the target effect, or the target editing template in the multimedia content editing draft is not reached. Information about other methods of acquiring the export use right of the target material, the target effect, or the target editing template in the multimedia content editing draft may also be displayed.

S340, in a case where the video indicated by the video playback task includes multiple videos, displaying an initial task state of the video playback task.

For example, a task progress value corresponding to the initial task state is zero.

The initial task state may be an initial task state with a task completion progress of 0 shown in Fig. 4.

S350, dynamically displaying a process in which the task completion progress grows from zero to a corresponding basic task progress value.

For example, the basic task progress value is determined based on account interaction attribute information of a user account that triggers the exporting operation before the video playback task starts.

In order to further increase the interest in the process of completing the video playback task, a task completion progress reward mechanism may also be provided in this embodiment.

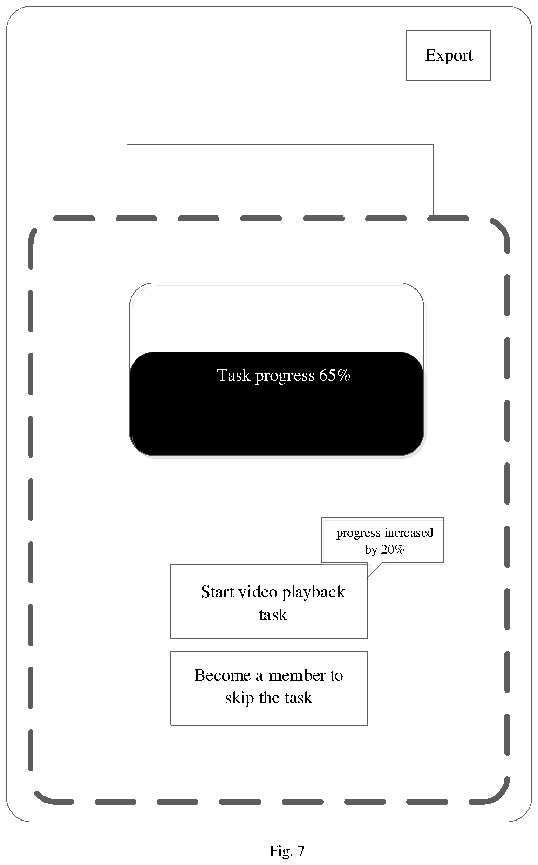

That is, before the video playback task starts, the task completion progress is first increased, so that the user starts to execute the video playback task in a non-initial task state. The task completion progress shown in Fig. 7 is to increase a task completion progress value from 0 to 65% before the video playback task starts. 65% is the basic task progress value.

For example, the rewarded basic task progress value is determined based on account interaction attribute information of a user account that triggers the exporting operation. For example, the account interaction attribute information may be information indicating a user's consumption willingness, and the higher the degree of the consumption willingness, the higher the rewarded basic task progress value.

S360, in response to a trigger operation for the video playback task, playing a video indicated by the video playback task.

S370, the video indicated by the video playback task including a first video, and in response to completion of playback of the first video, displaying an updating process in which a task completion progress is updated from a first progress value before the first video is played to a second progress value after the first video is played.

In a process of playing the video indicated by the video playback task, a playback task duration is displayed. For example, the playback task duration may be a cumulative playback duration of a current video, or may be duration information displayed in a countdown manner. When the user pauses the video playback task or exits a display interface of the video playback task, a playback process of the current playing video is stopped. In this case, in response to a video playback stop operation, if the playback task duration does not reach a corresponding preset task duration standard, task completion progress abnormality prompt information may be displayed to prompt the user that the video playback is not completed and all the task progress value cannot be fully acquired. The task completion progress may be updated based on a numerical relationship between the playback task duration and the preset task duration standard and a task progress value corresponding to the video of which the playing is stopped. That is, the task completion progress is updated proportionally based on a proportional relationship between the playback task duration and the preset task duration standard. Alternatively, a progress value of the task completion progress may be randomly increased, and the increased task progress value is smaller than the task progress value corresponding to the video that is not completely played.

S380, in response to completion of multiple videos indicated by the video playback task, performing export synthesis on the multimedia content editing draft to obtain a target video.

According to the technical solution of at least one embodiment of the present disclosure, a multimedia content editing draft is generated according to a multimedia material and editing information; in response to an exporting operation of the multimedia content editing draft, if the multimedia content editing draft satisfies a task trigger condition, an cumulative number of completed video playback tasks in a current timing period is counted; if the cumulative number of tasks does not reach a preset number upper limit threshold, a video playback task is displayed; in a case where a video indicated by the video playback task includes a plurality of videos, a zero progress value corresponding to an initial task state of the video playback task is displayed; a process in which a task completion progress grows from the zero progress value to a rewarded task progress value is dynamically displayed; in response to a trigger operation for the video playback task, the video indicated by the video playback task is played; and in response to each of the plurality of videos indicated by the video playback task being completely played, a change process of the task completion progress is displayed. At least one embodiment of the present disclosure solves the problem that the edited content cannot be exported due to some conditional limitations in a multimedia content editing process, combines multimedia content editing with the video playback task, and removes the conditional limitations upon the completion of the video playback task to export a multimedia content editing result, which may broaden an application service link in the multimedia content editing process and provide a multi-dimensional application experience in a process of exporting multimedia content editing results. In addition, in this embodiment, a dynamic effect display of increasing the task completion progress after each video is completely played and a task progress reward mechanism are added, which may intuitively display the task completion progress of the video playback task for the user and improve the interest in the process of completing the video playback task.

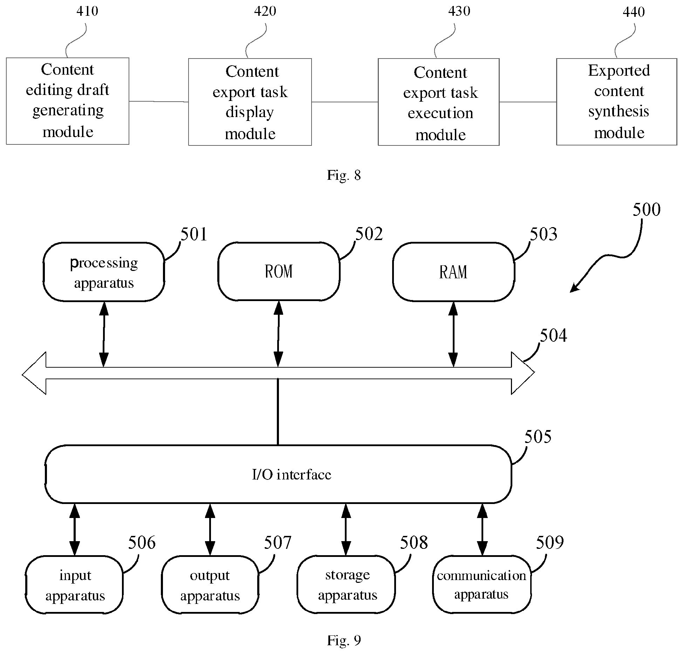

Fig. 8 shows a multimedia content editing apparatus provided by at least one embodiment of the present disclosure. The apparatus is applicable to a scenario of editing multimedia content such as audio and video data, especially a case where a multimedia content editing draft contains a multimedia material or editing information that is subject to use conditions and cannot be directly exported and used. The multimedia content editing apparatus may be implemented in the form of software and/or hardware, and may be configured in an electronic device, which may be a mobile terminal, a PC, a server, or the like.

As shown in Fig. 8, the multimedia content editing apparatus includes: a content editing draft generating module 410, a content export task display module 420, a content export task execution module 430, and an exported content synthesis module 440.

For example, the content editing draft generating module 410 is configured to generate a multimedia content editing draft according to a multimedia material and editing information, where the editing information is used to indicate an editing operation, and the editing operation is used to indicate applying an editing effect on the multimedia material; the content export task display module 420 is configured to, in response to an exporting operation of the multimedia content editing draft, if the multimedia content editing draft satisfies a task trigger condition, display a video playback task; the content export task execution module 430 is configured to, in response to a trigger operation for the video playback task, play a video indicated by the video playback task; and the exported content synthesis module 440 is configured to, in response to completion of playback of the video indicated by the video playback task, perform export synthesis on the multimedia content editing draft to obtain a target video.

According to the technical solution of at least one embodiment of the present disclosure, a multimedia content editing draft is generated according to a multimedia material and editing information, where the editing information is used to indicate an editing operation, and the editing operation is used to indicate applying an editing effect on the multimedia material; in response to an exporting operation of the multimedia content editing draft, if the multimedia content editing draft satisfies a task trigger condition, a video playback task is displayed; in response to a trigger operation for the video playback task, a video indicated by the video playback task is played; and in response to completion of playback of the video indicated by the video playback task, export synthesis is performed on the multimedia content editing draft to obtain a target video. At least one embodiment of the present disclosure solves the problem that the edited content cannot be exported due to some conditional limitations in a multimedia content editing process, combines multimedia content editing with the video playback task, and removes the conditional limitations upon the completion of the video playback task to export a multimedia content editing result, which may broaden an application service link in the multimedia content editing process and provide a multi-dimensional application experience in a process of exporting multimedia content editing results.

In an optional implementation, the video indicated by the video playback task includes multiple videos, and the content export task display module 420 may be further configured to:
display a task completion progress of the video playback task; and
the video indicated by the video playback task including a first video, and in response to completion of playback of the first video, display an updating process in which the task completion progress is updated from a first progress value before the first video is played to a second progress value after the first video is played, where a difference between the second progress value and the first progress value represents a task progress value corresponding to the first video.

In an optional implementation, the content export task display module 420 may be further configured to:
display, with a preset animation effect, an updating process in which the task completion progress is updated from a first progress value before the first video is played to a second progress value after the first video is played.

In an optional implementation, a process of determining the task progress value includes:
determining a task progress value corresponding to each video indicated by the video playback task based on content attribute information of each video indicated by the video playback task and a mapping relationship between the number of videos that have been played and the task progress value.

In an optional implementation, the content export task display module 420 may be further configured to:
display an initial task state of the video playback task, where a task progress value corresponding to the initial task state is zero; and
dynamically display a process in which the task completion progress grows from zero to a corresponding basic task progress value, where the basic task progress value is determined based on account interaction attribute information of a user account that triggers the exporting operation before the video playback task starts.

In an optional implementation, the content export task display module 420 may be further configured to:
display a playback task duration in a process of playing the video indicated by the video playback task;
in response to a video playback stop operation, if the playback task duration does not reach a corresponding preset task duration standard, display task completion progress abnormality prompt information; and
update the task completion progress based on a numerical relationship between the playback task duration and the preset task duration standard and a task progress value corresponding to the video of which the playing is stopped.

In an optional implementation, the content export task display module 420 may be further configured to:
before displaying the video playback task, count an cumulative number of completed video playback tasks in a current timing period; and
when the cumulative number of tasks reaches a preset number upper limit threshold, display operation abnormality prompt information of the exporting operation.

In an optional implementation, the task trigger condition includes one or more of the following conditions:
the multimedia material includes a target material, the editing effect includes a target effect, the editing information is specified editing information,
where the specified editing information includes a target editing template, and a task identification associated with the video playback task is displayed on an object control corresponding to the target material, the target effect, and the target editing template.

In an optional implementation, the content export task display module 420 may be further configured to:
in a state where the target video is not exported, mark a task completion progress of a video playback task associated with any multimedia content editing draft containing the target material, the target effect, and/or target editing information as a completed state within a preset validity period.

The multimedia content editing apparatus provided by an embodiment of the present disclosure can perform the multimedia content editing method provided by any embodiment of the present disclosure, and has corresponding functional modules for performing the method and beneficial effects.

It is worth noting that the units and modules included in the above apparatus are only divided according to functional logic, but are not limited to the above division, as long as the corresponding functions may be implemented. In addition, the specific names of the functional units are only for the convenience of distinguishing from each other, and are not used to limit the scope of protection of the embodiments of the present disclosure.

Fig. 9 is a schematic structural diagram of an electronic device provided by at least one embodiment of the present disclosure. Reference is made to Fig. 9 below, which illustrates a schematic structural diagram of an electronic device (such as a terminal device or a server in Fig. 9) 500 suitable for implementing the embodiments of the present disclosure. The terminal device in the embodiments of the present disclosure may include, but is not limited to, mobile terminals such as a mobile phone, a notebook computer, a digital broadcast receiver, a personal digital assistant (PDA), a tablet computer (PAD), a portable media player (PMP), a vehicle-mounted terminal (such as a vehicle navigation terminal) or the like, and fixed terminals such as a digital TV, a desktop computer, or the like. The electronic device shown in Fig. 9 is only an example, and should not impose any limitation on the function and scope of use of the embodiments of the present disclosure.

As shown in Fig. 9, the electronic device 500 may include a processing apparatus (such as a central processing unit, a graphics processing unit) 501, which may perform various appropriate actions and processes based on a program stored in a read-only memory (ROM) 502 or a program loaded from a storage apparatus 508 into a random access memory (RAM) 503. The RAM 503 further stores various programs and data required for operations of the electronic device 500. The processing apparatus 501, the ROM 502, and the RAM 503 are interconnected by means of a bus 504. An editing/output (I/O) interface 505 is also connected to the bus 504.

Usually, the following apparatuses may be connected to the I/O interface 505: an input apparatus 506 including, for example, a touch screen, a touchpad, a keyboard, a mouse, a camera, a microphone, an accelerometer, and a gyroscope; an output apparatus 507 including, for example, a liquid crystal display (LCD), a speaker, and a vibrator; the storage apparatus 508 including, for example, a magnetic tape and a hard disk; and a communication apparatus 509. The communication apparatus 509 may allow the electronic device 500 to perform wireless or wired communication with other devices to exchange data. Although Fig. 9 shows the electronic device 500 having various apparatuses, it should be understood that it is not required to implement or provide all of the illustrated apparatuses. Alternatively, more or fewer apparatuses may be implemented or provided.

In particular, according to the embodiments of the present disclosure, the process described above with reference to the flowchart may be implemented as a computer software program. For example, an embodiment of the present disclosure includes a computer program product including a computer program carried by a non-transitory computer-readable medium, where the computer program includes program codes for performing the method shown in the flowchart. In such an embodiment, the computer program may be downloaded and installed from a network via the communication apparatus 509, or installed from the storage apparatus 508, or installed from the ROM 502. When the computer program is executed by the processing apparatus 501, the above-mentioned functions defined in the method of the embodiment of the present disclosure are executed.

The names of messages or information interacted between multiple apparatuses in the implementations of the present disclosure are only for illustrative purposes, and are not intended to limit the scope of these messages or information.

The electronic device provided by an embodiment of the present disclosure and the multimedia content editing method provided by the above embodiment belong to the same one inventive concept. For technical details not described in detail in this embodiment, reference may be made to the above embodiment, and this embodiment has the same beneficial effects as the above embodiment.

An embodiment of the present disclosure further provides a computer storage medium having a computer program stored thereon, where the program, when executed by a processor, implements the multimedia content editing method provided by the above embodiment.

It should be noted that the above computer-readable medium in the present disclosure may be a computer-readable signal medium, a computer-readable storage medium, or any combination thereof. The computer-readable storage medium may be, for example, but is not limited to, an electrical, magnetic, optical, electromagnetic, infrared, or semiconductor system, apparatus, device, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program, which may be used by or in combination with an instruction execution system, apparatus or device. In the present disclosure, a computer-readable signal medium may include a data signal propagated on a baseband or as a part of a carrier, and computer-readable program code is carried therein. This propagated data signal may be in multiple forms, and includes, but is not limited to, an electromagnetic signal, an optical signal, or any suitable combination thereof. The computer-readable signal medium may also be any computer-readable medium other than the computer-readable storage medium, and the computer-readable signal medium may send, propagate, or transmit a program used by or in combination with an instruction execution system, apparatus or device. The program code contained on the computer-readable medium may be transmitted by any suitable medium, including but not limited to: a wire, an optical cable, a radio frequency (RF), or any suitable combination thereof.

In some implementations, a client and a server may communicate using any currently known or future developed network protocol, such as the Hypertext Transfer Protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc peer-to-peer network), and any network currently known or to be developed in the future.

The above computer-readable medium may be contained in the above electronic device, or may exist alone without being assembled into the electronic device.

The above computer-readable medium carries one or more programs that, when executed by the electronic device, cause the electronic device to:
generate a multimedia content editing draft according to a multimedia material and editing information, where the editing information is used to indicate an editing operation, and the editing operation is used to indicate applying an editing effect on the multimedia material;
in response to an exporting operation of the multimedia content editing draft, if the multimedia content editing draft satisfies a task trigger condition, display a video playback task;
in response to a trigger operation for the video playback task, play a video indicated by the video playback task; and
in response to completion of playback of the video indicated by the video playback task, perform export synthesis on the multimedia content editing draft to obtain a target video.

The computer program code for performing the operations of the present disclosure may be written in one or more programming languages or a combination thereof. The above programming languages include, but are not limited to, an object-oriented programming language such as Java, Smalltalk, C++, and further include conventional procedural programming languages such as "C" language or similar programming languages. The program code may be completely executed on a user computer, partially executed on a user computer, executed as an independent software package, partially executed on a user computer and partially executed on a remote computer, or completely executed on a remote computer or server. In the case of involving a remote computer, the remote computer may be connected to the user computer through any kind of network, including a local area network (LAN) or a wide area network (WAN), or it may be connected to an external computer (for example, connected via the Internet using an Internet service provider).

The flowcharts and block diagrams in the drawings illustrate the possibly implemented architectures, functions, and operations of the system, method, and computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagram and/or the flowchart, and the combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or hardware. The name of the unit does not constitute a limitation on the unit itself under certain circumstances, and for example, the first obtaining unit may also be described as "a unit for obtaining at least two internet protocol addresses".

The functions described herein above may be performed at least in part by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may include, but is not limited to, an electrical, magnetic, optical, electromagnetic, infrared, or semiconductor system, apparatus or device, or any suitable combination of the above. More specific examples of the machine-readable storage medium would include an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above.

An embodiment of the present disclosure further provides a computer program product including a computer program that, when executed by a processor, implements the multimedia content editing method provided by any one of the embodiments of the present disclosure.

In the process of implementing the computer program product, the computer program code for performing the operations of the present disclosure may be written in one or more programming languages or a combination thereof. The programming languages include object-oriented programming languages such as Java, Smalltalk, C++, and further include conventional procedural programming languages such as "C" language or similar programming languages. The program code may be completely executed on a user computer, partially executed on a user computer, executed as an independent software package, partially executed on a user computer and partially executed on a remote computer, or completely executed on a remote computer or server. In the case of involving a remote computer, the remote computer may be connected to the user computer through any kind of network, including a local area network (LAN) or a wide area network (WAN), or it may be connected to an external computer (for example, connected via the Internet using an Internet service provider).

The above description only illustrates preferred embodiments of the present disclosure and applied technical principles. Those skilled in the art should understand that the scope of disclosure involved in the present disclosure is not limited to the technical solutions formed by the specific combination of the above technical features, and should also cover other technical solutions formed by any combination of the above technical features or their equivalent features without departing from the above disclosure concept. For example, the above features and the technical features provided in the present disclosure (but not limited to) with similar functions may be replaced each other to form a technical solution.

In addition, although the operations are depicted in a specific order, this should not be understood as requiring the operations to be performed in the specific order shown or in a sequential order. Under certain circumstances, multitasking and parallel processing may be beneficial. Likewise, although the above discussion contains a number of specific implementation details, these should not be interpreted as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the subject matter has been described in language specific to structural features and/or logical actions of the method, it should be understood that the subject matter defined in the appended claims is not necessarily limited to the specific features or actions described above. Rather, the specific features and actions described above are merely exemplary forms of implementing the claims.

## Claims

1. A multimedia content editing method, comprising:
generating a multimedia content editing draft according to a multimedia material and editing information, wherein the editing information is used to indicate an editing operation, and the editing operation is used to indicate applying an editing effect on the multimedia material;
in response to an exporting operation of the multimedia content editing draft, if the multimedia content editing draft satisfies a task trigger condition, displaying a video playback task;
in response to a trigger operation for the video playback task, playing a video indicated by the video playback task; and
in response to completion of playback of the video indicated by the video playback task, performing export synthesis on the multimedia content editing draft to obtain a target video.

2. The method of claim 1, wherein the video indicated by the video playback task comprises a plurality of videos, and the method further comprises:
displaying a task completion progress of the video playback task; and
the video indicated by the video playback task comprising a first video, and in response to completion of playback of the first video, displaying an updating process in which the task completion progress is updated from a first progress value before the first video is played to a second progress value after the first video is played, wherein a difference between the second progress value and the first progress value represents a task progress value corresponding to the first video.

3. The method of claim 2, wherein displaying the updating process in which the task completion progress is updated from the first progress value before the first video is played to the second progress value after the first video is played comprises:
displaying, with a preset animation effect, the updating process in which the task completion progress is updated from the first progress value before the first video is played to the second progress value after the first video is played.

4. The method of claim 3, wherein a process of determining the task progress value comprises:
determining a task progress value corresponding to each video indicated by the video playback task based on content attribute information of each video indicated by the video playback task and a mapping relationship between a number of videos that have been played and the task progress value.

5. The method of any one of claims 2 to 4, wherein displaying the task completion progress of the video playback task comprises:
displaying an initial task state of the video playback task, wherein a task progress value corresponding to the initial task state is zero; and
dynamically displaying a process in which the task completion progress grows from zero to a corresponding basic task progress value, wherein the basic task progress value is determined based on account interaction attribute information of a user account that triggers the exporting operation before the video playback task starts.

6. The method of any one of claims 2 to 5, further comprising:
displaying a playback task duration in a process of playing the video indicated by the video playback task;
in response to a video playback stop operation, if the playback task duration does not reach a corresponding preset task duration standard, displaying task completion progress abnormality prompt information; and
updating the task completion progress based on a numerical relationship between the playback task duration and the preset task duration standard and a task progress value corresponding to a video of which playing is stopped.

7. The method of any one of claims 1 to 6, further comprising:
before displaying the video playback task, counting a cumulative number of completed video playback tasks in a current timing period; and
when the cumulative number of tasks reaches a preset number upper limit threshold, displaying operation abnormality prompt information of the exporting operation.

8. The method of any one of claims 1 to 7, wherein the task trigger condition comprises one or more of following conditions:
the multimedia material comprises a target material, the editing effect comprises a target effect, and the editing information is specified editing information,
wherein the specified editing information comprises a target editing template, and a task identification associated with the video playback task is displayed on an object control corresponding to the target material, the target effect, and the target editing template.

9. The method of claim 8, further comprising:
in a state where the target video is not exported, marking a task completion progress of a video playback task associated with any multimedia content editing draft containing the target material, the target effect, and/or the target editing information as a completed state within a preset validity period.

10. A multimedia content editing apparatus, comprising:
a content editing draft generating module, configured to generate a multimedia content editing draft according to a multimedia material and editing information, wherein the editing information is used to indicate an editing operation, and the editing operation is used to indicate applying an editing effect on the multimedia material;
a content export task display module, configured to, in response to an exporting operation of the multimedia content editing draft, if the multimedia content editing draft satisfies a task trigger condition, display a video playback task;
a content export task execution module, configured to, in response to a trigger operation for the video playback task, play a video indicated by the video playback task; and
an exported content synthesis module, configured to, in response to completion of playback of the video indicated by the video playback task, perform export synthesis on the multimedia content editing draft to obtain a target video.

11. An electronic device, comprising:
one or more processors; and
a storage apparatus, configured to store one or more programs,
wherein the one or more programs, when executed by the one or more processors, cause the one or more processors to implement the multimedia content editing method of any one of claims 1 to 9.

12. A computer-readable storage medium, having a computer program stored thereon, wherein the computer program, when executed by a processor, implements the multimedia content editing method of any one of claims 1 to 9.

13. A computer program product, comprising a computer program, wherein the computer program, when executed by a processor, implements the multimedia content editing method of any one of claims 1 to 9.
